# EUROPEAN PATENT SPECIFICATION

(11) **EP 1 416 169 B1**
(45) Date of publication and mention of the grant of the patent: **31.05.2006**
(21) Application number: 03380241.4
(22) Date of filing: 23.10.2003
(51) Int. Cl.: F16B 12/14, F16B 12/48

(54) **Dismountable modular piece of furniture**
Zerlegbares und modulares Element für Möbel
Pièce modulaire démontable pour meuble

(30) Priority: 28.10.2002 ES 200202476
(43) Date of publication of application: 06.05.2004
(73) Proprietor: Decoplastic 2000, S.L., 08240 Manresa (ES)
(72) Inventor: Santamaria Cabanas, Montserrat, 08240 Manresa (ES)
(74) Representative: SUGRANES - VERDONCES - FERREGÜELA

(56) References cited:
- DE-A- 2 228 962
- FR-A- 646 016
- FR-A- 2 633 344

## Description

### Technical field of the invention

The invention refers to a modular piece of furniture, in particular, a set of shelves, bench or similar, which can be mounted and dismounted without needing to use nuts and bolts, glues or other similar fixing means.

### Background of the invention

Some embodiments of modular-type furniture are known which comprise various parts or elements which, when mounted, form a shelf, bench, container or other similar object.

A known assembly of furniture ports is for instance disclosed in document FR-A-2633344.

Such arrangements enable users to adapt them to their needs, choosing the number of shelves they require, their length and also the distance or storage space between a shelf and the one immediately above.

This type of dismountable shelving contains vertical elements, in the form of uprights or columns, the uprights having holes going through them for inserting the elements which support and bear the weight of the shelves and for fixing the crossbeams, which may or may not be positioned between the uprights.

Some known embodiments of this type are made of plastic materials, in this case PVC (Polyvinyl Chloride), the most common material used because of its sturdiness and resistance and because it can be used with adhesive materials, glues and other similar fixing materials.

The known embodiments of dismountable shelving which are made of plastic materials do in fact use glues or adhesive materials for fixing the aforementioned elements which support and bear the weight of the shelves, usually in the four corners, and which are then inserted in the holes of the uprights to make the shelving sturdier and more stable during assembly.

The support elements are fixed to the shelves during the production process using adhesive glues, and this can be problematic later when the array of all the parts making up the shelving is packaged, both in terms of storage and also for transporting the goods to the points of sale, since it is difficult to fit in all the elements using a minimum amount of space. As well as the problem of packaging, said support elements break all too easily during transportation of the packaged shelves because they protrude from the sides of the shelf-packaging.

The known embodiments of modular shelves also only use PVC because adhesive materials or glues do not stick properly to more common plastic materials such as polythenes, polypropylenes, abs, etc. Despite the fact that PVC is a material which is not easy to recycle, a different material is not used because a solution has not been found to the problem of fixing the support elements to the shelves or any other part of the shelving without using adhesive materials or glues, or nuts and bolts so as not to complicate assembly of the shelves.

It should not be forgotten that the correct precautions must be taken when using glues or similar products to avoid causing health problems to employees working with this type of product. In known embodiments of modular furniture which does not use adhesive materials or glues, the complexity of the intermediate elements joining the shelves to the uprights inflate the cost of manufacture since they require complex moulds to be made, reduce the aesthetic appeal of this type of embodiment, and do not give the end product the important characteristic of proper stability once mounted. An example of the characteristics of this type of embodiment is in document EP 1216630, which describes dismountable modular shelving, where the uprights and shelves are joined together using intermediate elements, positioned between the uprights, which support the shelves and prevent them from moving sideways, by inserting protruding parts which are joined to the intermediate elements into holes provided in the shelves.

From the description herein, it is noted that there is no system of modular shelving which is made of plastic, whose support elements can be fixed without using glues, adhesive materials, or nuts and bolts, and with a final piece of furniture which has a structure with improved characteristics in terms of sturdiness and stability.

### Explanation of the invention

In order to improve the efficacy of existing devices, the dismountable modular piece of furniture in the invention will be explained.

The modular piece of furniture presented herein, in particular, a set of shelves, bench or container, which can be dismounted without needing to use nuts and bolts, glues and other similar fixing means and which is characterized, in essence, because it comprises:
a) vertical uprights, with at least two vertical-axis holes in the ends;
b) joining elements, with the same section as the two vertical-axis holes, for housing in said holes;
c) horizontal elements, with a first set of vertical-axis holes in each of their longitudinal ends; and
d) horizontal crossbeams, with a first set of holes, which are axially aligned with the first set of holes in the horizontal elements;

the joining elements being made up of two similar parts, each one having two parts themselves, the first part, or base, being the same for all parts, having the same section as the holes in the uprights and a larger section than the first set of holes in the horizontal elements and the crossbeams, and a second part, which is narrower, with screw threading inside or outside, respectively, said parts being complementary so that the first is screwed into the second, so that each horizontal crossbeam is positioned below a horizontal element and the holes going through it are axially aligned with the first set of holes going through the horizontal element, the two parts of the joining elements being screwed together by inserting each one into one of the ends of the hole made by joining the horizontal element and the horizontal crossbeam, the horizontal element and the horizontal crossbeam in this way being positioned between the corresponding bases, like a sandwich, because the more pressure exerted on the bases on the surfaces of the horizontal element and of the crossbeam, the more the parts are screwed together, said bases being in an orthogonal position with respect to the longitudinal plane of the horizontal element and adapted for insertion into the corresponding vertical-axis holes going through the vertical uprights.

According to a preferred form of embodiment, the vertical uprights are hollow, tubular forms, at least at their ends, and are joined in pairs with a crossbeam, forming an array in the shape of an H and whose ends are adapted to receive the housing of the bases of the joining elements which can be fixed to the horizontal elements.

According to another preferred form of embodiment, the vertical uprights are sturdy flat sheets.

According to another aspect of the invention, the horizontal elements are made up of a series of rectangular sections, placed parallel to one another, the sections which do not have a first set of holes for fixing to the vertical uprights being joined to the crossbeam elements via joining means.

According to a preferred form of embodiment, the rectangular sections are hollow and have at least two longitudinal and continuous partition walls on the inside, for reinforcement.

According to another aspect of the invention, the means for joining the sheets to the crossbeams consist in dual pressure bolts, the first end of which is inserted into a second hole in the surface of the crossbeam element, the bolt being fixed to said crossbeam, and the second end of which is inserted into a second corresponding hole in the surface of the sections, said sections being fixed to the bolts and, therefore, also to the crossbeam element.

According to a preferred embodiment, the parallel sections are joined by at least one transversal bar.

According to another aspect of the invention, the tubular sections which make up a horizontal element have a portion in one of their ends whose section, which is hollow, is smaller than its central stretch, each one of said portions being adapted for insertion inside a corresponding portion of the sections without ribs, which form a second horizontal element opposite the first, said portions having respective holes, axially aligned with the holes going through the vertical uprights and with the first set of holes of the crossbeam elements and through which the two parts of the joining elements can be screwed, or having respective holes for receiving the joining means for fixing only to the corresponding crossbeam.

According to another aspect of the invention, the bases of the joining elements are adapted for joining to various external elements, such as revolving wheels, rubber wedges or covers.

### Brief description of the drawings

In the pages showing drawings for the specification herein, two preferred embodiments are shown of a dismountable modular piece of furniture. In said drawings,
- Fig. 1: is a perspective and broken-down view of the system for assembly, according to a preferred form of embodiment, of a modular piece of furniture, in particular, shelving;
- Fig. 2: is a perspective and broken-down view of the system for assembly, according to another preferred form of embodiment;
- Fig. 3: is a perspective view of an assembled modular bench.
- Fig. 4: is a detailed perspective and broken-down view of area A of the bench in Fig.3.

### Detailed description of the drawings

The following description refers to the drawings described above, which show in detail the different parts making up a modular piece of furniture like the one in the invention, which in the example is a set of modular shelves.

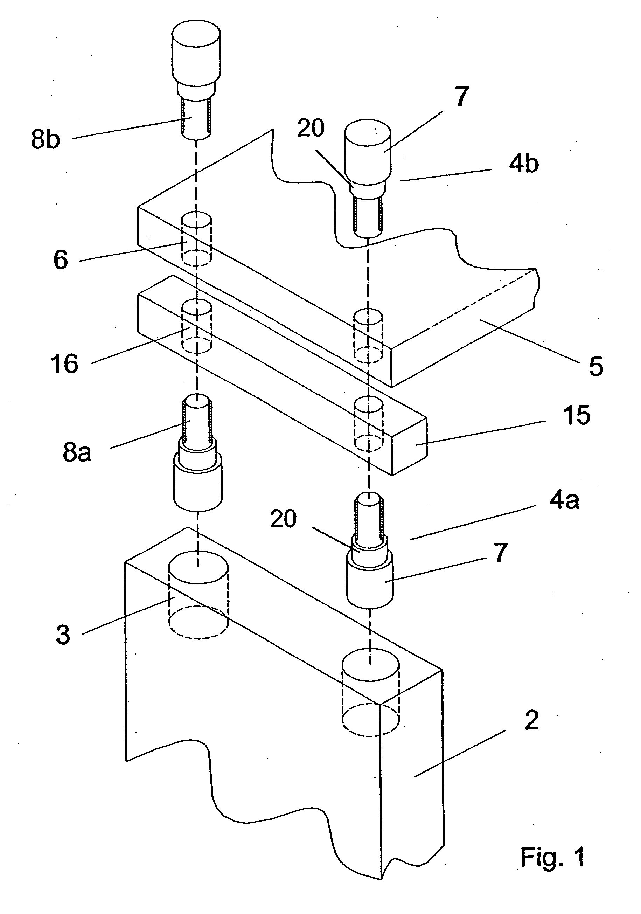

In Fig.1, a modular shelving system is shown according to a possible form of embodiment, in which the different elements making up the set of shelves are joined without needing to use glues or other adhesive materials.

As shown in Fig.1, the horizontal elements 5, which serve as shelves, are made up of flat quadrangular sheets whose ends rest on the crossbeams 15, also quadrangular, on which there is a first set of holes 16, enabling the different elements to be joined to the shelving.

To fix the shelves to the crossbeams, and then both to the uprights 2, the shelves 5 have a first set of holes 6, which coincide axially with the holes 16 of the crossbeams 15, so that a first part 4b is inserted into each hole 6 of the shelves 5 through its upper end, so that the complementary parts 4a can be inserted through the lower ends of the holes 16 of the crossbeams 15. As both parts have holes along the same axis, the threaded part 8a, on the outside of each part 4a screws into its complementary part 8b of the joining parts 4b, the shelves 5 and the crossbeams 15 being positioned between the bases 7 of the two threaded parts. As the bases 7 have a larger section than the holes, these act as a buffer when screwing parts 4a and 4b.

The shelves 5 are thus joined to the crossbeams 15, and the bases 7 of the screwed parts are in an orthogonal position with respect to the longitudinal plane of the shelves, the bases 7 also being adapted for insertion into the vertical-axis holes 3 on the vertical uprights 2.

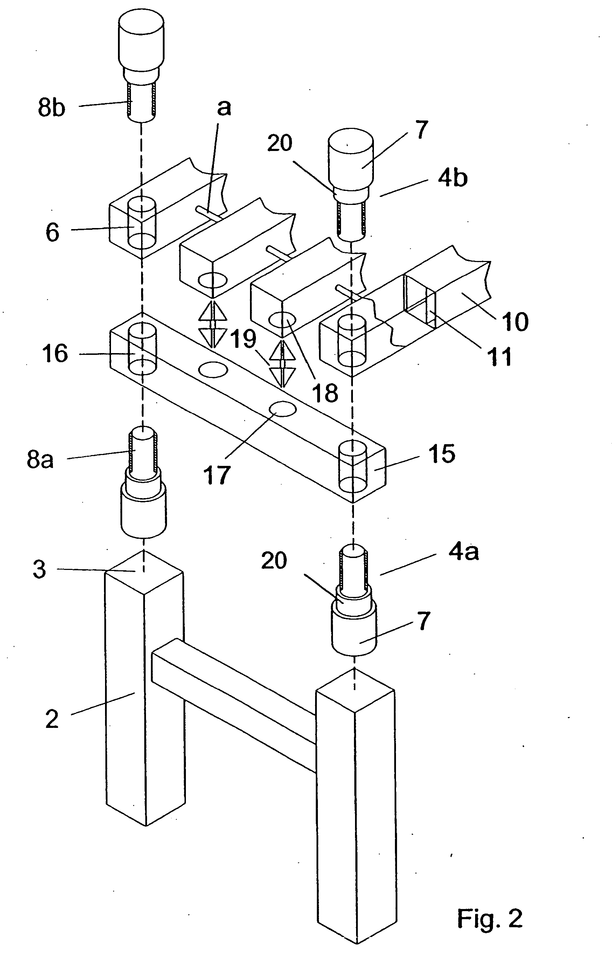

To ensure that the bases 7 are in an orthogonal position with respect to the shelves, the parts 4a and 4b can have a stretch 20, represented in Figs. 1 and 2, for insertion, as in a socket, into the corresponding hole of the shelf 5 (or equivalent tubular shape 10) or of the crossbeam 15.

The height of the vertical uprights 2 being variable, different spaces can be made between the shelves 5, so that the same set of shelves can have different combinations with vertical uprights 2 positioned in different ways.

It should be added that the number of holes in both the crossbeams 15 and the shelves 5, as well as the vertical-axis holes 3 of the uprights, can vary, depending on the requirements in terms of weight to be borne and the desired aesthetic value of the end set of shelves.

According to another type of preferred embodiment shown in Fig.2, the shelves 5 are made up of various tubular shapes 10, of quadrangular section, which can, optionally, be joined using one or several transversal bars 9, said tubular shapes 10 having two ribs 11, for reinforcement, which longitudinally divide the inside of each tubular shape into three different areas.

Optionally, the tubular shapes 10 can be free of ribs 11, said ribs 11 being replaced by hollow cylindrical bushes 21 which are positioned axially coinciding with the respective holes inside the tubular forms 10 or shelves 5.

Each of the longitudinal ends of the sections 10 coinciding with the first set of holes 16 of the crossbeams 15, have corresponding holes 6 which coincide axially with the first ones, so that these tubular forms 10 and the crossbeams 15 are joined by screwing the parts 4a and 4b through them as detailed in the previous example in Fig.1.

To fix to the crossbeams 15 the sections 10 which do not have a first set of holes 6 and which are joined to the crossbeams 15 using joining elements 4, dual pressure bolts 19 are provided, whose first end is inserted into a second hole 17 on the surface of the crossbeam element 15, the bolt being fixed to said crossbeam, and whose second end is inserted into a corresponding second hole 18, on the surface of the section 10, the section 10 being fixed to the bolt and, therefore, also to the crossbeam element 15, as shown in Fig.2.

In the embodiment of Fig.2, the vertical uprights 2 are hollow tubular forms, at least at their ends, and are joined in pairs with a crossbeam, forming an array in the shape of an H.

As all the shelving components can be packaged separately, the volume of packaging is smaller than for existing embodiments, and is further reduced if tubular sections are used 10, since these can be positioned adjacently, side by side, when packaged. Furthermore, the quality of the product is also improved by preventing breakage of the pre-assembled parts during transportation, as is the case in existing embodiments. Another very important aspect is that the modular furniture, like the one in the invention, can be made of materials other than PVC, without needing to use adhesive materials or glues during manufacture.

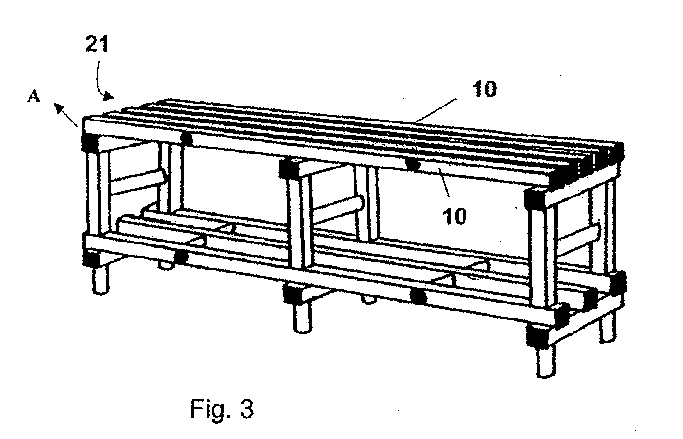

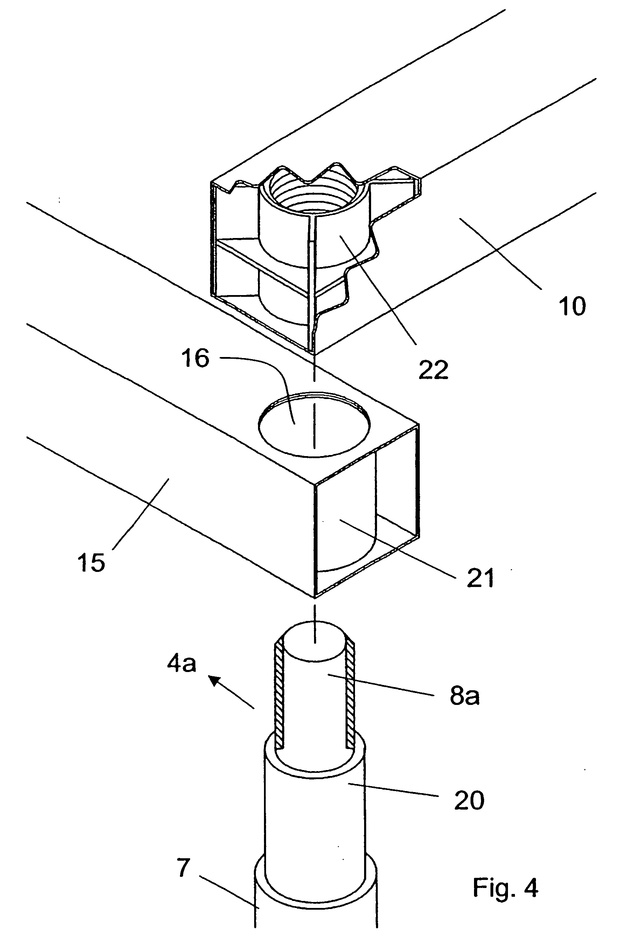

Fig.3 represents a bench which has already been assembled, ready for use and according to a preferred form of embodiment, while Fig.4 is a detailed perspective and broken-down view of Area A of the bench in Fig.3.

In said figures, it can be seen how the tubular forms 10 of the upper shelf 21 do not have holes, since these only perforate the lower surface of the tubular form 10. The fact that there is no part with screw threading inside, to join the complementary part 4a, is resolved by incorporating a bush 22 with threading inside which is positioned axially to coincide with the hole of the crossbeam 15. As the bush 22 also has an external quadrangular shape, it stops it from revolving on itself inside the tubular form 10, thus acting as a nut and enabling the portion 8a of the joining part 4a to be screwed into it.

## Claims

1. Dismountable modular piece of furniture, in particular, a set of shelves, bench or container, **characterized in that** it comprises:
a) vertical uprights (2), with at least two vertical-axis holes (3) in the ends;
b) joining elements (4), with the same section as the two vertical-axis holes (3), for housing in said holes;
c) horizontal elements (5), with a first set of vertical-axis holes (6) in each of their longitudinal ends; and
d) horizontal crossbeams (15), with a first set of holes (16) which are axially aligned with the first set of holes (6) in the horizontal elements;
the joining elements (4) being made up of similar two parts (4a and 4b), each one having two parts themselves, the first part or base (7), being the same for all parts, and having the same section as the holes (3) in the uprights and a larger section than the first set of holes (6), and a second part (8a and 8b), which is narrower, with screw threading on the outside (8a) or inside (8b), respectively, said parts being complementary, so that the first is screwed into the second, so that each horizontal crossbeam (15) is positioned below a horizontal element (5) and its holes (16) are axially aligned with the first set of holes (6) in the horizontal element (5), the two parts (4a and 4b) of the joining elements being screwed together by inserting each one into one of the ends of the hole made by joining the two elements, the horizontal element (5) and the horizontal crossbeam (15) in this way being positioned between the corresponding bases (7), like a sandwich, because the more pressure exerted on the bases on the surfaces of the horizontal element (5) and of the crossbeam (15), the more the parts are screwed together, said bases being in an orthogonal position with respect to the longitudinal plane of the horizontal element and adapted for insertion into the corresponding holes (3) of the vertical uprights.

2. Modular piece of furniture according to claim 1, **characterized in that** the vertical uprights (2) are hollow, tubular forms, at least at their ends, and are joined in pairs with a crossbeam, forming an array in the shape of an H, and whose ends are adapted to receive the housing of the bases (7) of the joining elements (4) which can be fixed to the horizontal elements (5).

3. Modular piece of furniture according to claim 1, **characterized in that** the vertical uprights (2) are hollow, tubular forms, at least at their ends, and whose ends are adapted to receive the housing of the bases (7) of the joining elements (4) which can be fixed to the horizontal elements (5).

4. Modular piece of furniture according to claim 1, **characterized in that** the vertical uprights (2) are sturdy, flat sheets.

5. Modular piece of furniture according to the previous claims, **characterized in that** the horizontal elements (5) are made up of a series of rectangular sections (10) and placed parallel to one another, the sections which do not have a first set of holes (6) for fixing to the vertical uprights (2), being joined to the crossbeam elements (15), via joining means (19).

6. Modular piece of furniture according to claim 3, **characterized in that** the rectangular sections (10) are hollow and have at least two longitudinal and continuous partition walls (11) on the inside, for reinforcement.

7. Modular piece of furniture according to claims 4 and 5, **characterized in that** the joining means (19) consist in dual pressure bolts, the first end of which is inserted into a second hole (17), which is in the surface of the crossbeam element (15), the bolt being fixed to said crossbeam, and the second end of which is inserted into a second corresponding hole (18) in the surface of the section (10), said section (10) being fixed to the bolt and, therefore, also the crossbeam element (15).

8. Modular piece of furniture according to claims 4, 5 and 6, **characterized in that** the parallel sections (10) are joined by at least one transversal bar (9).

9. Modular piece of furniture according to the previous claims, **characterized in that** the bases (7) of the joining elements (4a and 4b) are adapted for joining to various external elements, such as revolving wheels, rubber wedges or covers.

## Patentansprüche

1. Zerlegbares, modulares Möbelstück, insbesondere eine Regalwand, Bank oder Behälter, **dadurch gekennzeichnet, dass** sie/er folgendes umfasst:
a) vertikale Pfosten bzw. Ständer (2), mit mindestens zwei Stehachsenlöchern (3) in den Enden;
b) Verbindungselemente (4) mit demselben Abschnitt wie die beiden Stehachsenlöcher (3), um in den Löchern untergebracht zu werden;
c) horizontale Elemente (5) mit einem ersten Satz von Stehachsenlöchern (6) in jedem ihrer longitudinalen Enden; und
d) horizontale Querbalken bzw. Querträger (15) mit einem ersten Satz von Löchern (16), welche mit dem ersten Satz von Löchern (6) in den horizontalen Elementen axial ausgerichtet sind;
wobei die Verbindungselemente (4) aus zwei ähnlichen Teilen (4a und 4b) hergestellt sind, von denen jedes für sich zwei Teile aufweist, und zwar den ersten Teil oder Sockel (7), der für alle Teile gleich ist, und welcher denselben Abschnitt wie die Löcher (3) in den Pfosten bzw. Ständern und einen größeren Abschnitt als der erste Satz von Löchern (6) aufweist, und einen zweiten Teil (8a und 8b), welcher schmaler ist, und jeweils mit Schraubengewinde auf der Außenseite (8a) oder der Innenseite (8b), wobei die Teile komplementär sind, sodass das erste in das zweite geschraubt wird, sodass jeder horizontale Querbalken bzw. Querträger (15) unter einem horizontalen Element (5) angebracht ist, und seine Löcher (16) mit dem ersten Satz von Löchern (6) in dem horizontalen Element (5) axial ausgerichtet ist, wobei die beiden Teile (4a und 4b) der Verbindungselemente **dadurch**, dass jedes Einzelne in eines der Enden des Loches eingesetzt wird, welches durch das Verbinden der beiden Elemente, und zwar des horizontalen Elementes (5) und dem horizontalen Querbalken bzw. Querträger (15) entsteht, welche auf diese Weise zwischen den entsprechenden Sockeln (7) angebracht werden, ähnlich einem Sandwich, denn je mehr Druck auf die Sockel auf den Oberflächen des horizontalen Elementes (5) und von dem Querbalken bzw. Querträger (15) ausgeübt wird, desto mehr werden die Teile zusammen geschraubt, wobei sich die Sockel in Bezug auf die longitudinale Ebene des horizontalen Elementes in einer rechtwinkligen Position befinden, und zum Einsetzen in die entsprechenden Löcher (3) der vertikalen Pfosten bzw. Ständer angepasst sind.

2. Modulares Möbelstück gemäß Anspruch 1, **dadurch gekennzeichnet, dass** die vertikalen Pfosten bzw. Ständer (2) zumindest an ihren Enden ausgehöhlt und rohrförmig sind, und paarweise mit einem Querbalken bzw. Querträger verbunden sind, wobei sie ein Feld in Form eines "H" bilden, und deren Enden so angepasst sind, um das Gehäuse der Sockel (7) der Verbindungselemente (4) aufzunehmen, welche in den horizontalen Elementen (5) fixiert werden können.

3. Modulares Möbelstück gemäß Anspruch 1, **dadurch gekennzeichnet, dass** die vertikalen Pfosten bzw. Ständer (2) zumindest an ihren Enden ausgehöhlt und rohrförmig sind, und deren Enden so angepasst sind, um das Gehäuse der Sockel (7) der Verbindungselemente (4) aufzunehmen, welche in den horizontalen Elementen (5) fixiert werden können.

4. Modulares Möbelstück gemäß Anspruch 1, **dadurch gekennzeichnet, dass** die vertikalen Pfosten bzw. Ständer (2) stabile bzw. solide flache Platten sind.

5. Modulares Möbelstück gemäß der vorhergehenden Ansprüche, **dadurch gekennzeichnet, dass** die horizontalen Elemente (5) aus einer Reihe von rechtwinkligen Abschnitten (10) bestehen und parallel zueinander angeordnet sind, wobei die Abschnitte, welche keinen Satz von ersten Löchern (6) aufweisen, um die vertikalen Pfosten bzw. Ständer (2) zu fixieren, über verbindende Mittel (19) mit den Querbalken- bzw. Querträgerelementen (15) verbunden sind.

6. Modulares Möbelstück gemäß Anspruch 3, **dadurch gekennzeichnet, dass** die rechtwinkligen Abschnitte (10) ausgehöhlt sind und auf der Innenseite mindestens zwei longitudinale und durchgehende Trennwände (11) zur Verstärkung aufweisen.

7. Modulares Möbelstück gemäß Anspruch 4 und 5, **dadurch gekennzeichnet, dass** die Verbindungsmittel (19) aus Zweifach-Pressbolzen bestehen, von welchen das erste Ende in ein zweites Loch (17) eingesetzt wird, welches sich in der Oberfläche des Querbalken- bzw. Querträgerelementes (15) befindet, wobei der Bolzen mit dem Querbalken bzw. Querträger fixiert ist, und von welchen das zweite Ende in ein entsprechendes zweites Loch (18) in der Oberfläche des Abschnitts (10) eingesetzt wird, wobei der Abschnitt (10) mit dem Bolzen fixiert ist, und deshalb auch das Querbalken- bzw. Querträgerelementes (15).

8. Modulares Möbelstück gemäß Anspruch 4, 5 und 6, **dadurch** charakterisiert, dass die parallelen Abschnitte (10) durch zumindest eine quer hindurchlaufende Latte bzw. Leiste (9) verbunden sind.

9. Modulares Möbelstück gemäß der vorhergehenden Ansprüche, **dadurch gekennzeichnet, dass** die Sockel (7) der Verbindungselemente (4a und 4b) so angepasst sind, um die verschiedenen externen Elemente, wie zum Beispiel drehbare Räder, Gummikeile oder Abdeckungen zu verbinden.

## Revendications

1. Meuble modulaire et démontable, en particulier, un ensemble d'étagères, un banc ou un récipient, **caractérisé en ce qu'**il comprend :
a) des montants verticaux (2), avec au moins deux trous (3) d'axe vertical dans les extrémités ;
b) des éléments d'assemblage (4), avec la même section que les deux trous (3) d'axe vertical, pour loger dans lesdits trous ;
c) des éléments horizontaux (5), avec un premier ensemble de trous (6) d'axe vertical dans chacune de leurs extrémités longitudinales ; et
d) des traverses horizontales (15), avec un premier ensemble de trous (16), qui sont axialement alignés avec le premier ensemble de trous (6) dans les éléments horizontaux ;
les éléments d'assemblage (4) étant composés de deux pièces similaires (4a et 4b), chacune ayant deux pièces elles-mêmes, la première pièce ou base (7) étant la même pour toutes les pièces, ayant la même section que les trous (3) dans les montants et une plus grande section que le premier ensemble de trous (6), et une seconde partie (8a et 8b) qui est plus étroite avec un filetage à l'extérieur (8a) ou à l'intérieur (8b), respectivement, lesdites pièces étant complémentaires de sorte que la première est vissée dans la seconde, de sorte que chaque traverse (15) horizontale est positionnée au dessous d'un élément horizontal (5) et que ses trous (16) sont axialement alignés avec le premier ensemble de trous (6) dans l'élément horizontal (5), les deux pièces (4a et 4b) des éléments d'assemblage étant vissées ensemble en insérant chacune dans chacune des extrémités du trou réalisé en assemblant les deux éléments, l'élément horizontal (5) et la traverse horizontale (15) étant ainsi positionnés entre les bases correspondantes (7), comme un sandwich, parce que plus on exerce une pression sur les bases sur les surfaces de l'élément horizontal (5) et de la traverse (15), plus les pièces sont vissées ensemble, lesdites bases étant dans une position orthogonale par rapport au plan longitudinal de l'élément horizontal et adaptées pour l'insertion dans les trous (3) correspondants des montants verticaux.

2. Meuble modulaire selon la revendication 1, **caractérisé en ce que** les montants verticaux (2) sont des formes creuses, tubulaires, au moins au niveau de leurs extrémités, et sont assemblés en paires avec une traverse formant une structure en forme de H, et dont les extrémités sont adaptées pour recevoir le logement des bases (7) des éléments d'assemblage (4) qui peuvent être fixés sur les éléments horizontaux (5).

3. Meuble modulaire selon la revendication 1, **caractérisé en ce que** les montants verticaux (2) sont des formes creuses, tubulaires, au moins au niveau de leurs extrémités, et dont les extrémités sont adaptées pour recevoir le logement des bases (7) des éléments d'assemblage (4) qui peuvent être fixés sur les éléments horizontaux (5).

4. Meuble modulaire selon la revendication 1, **caractérisé en ce que** les montants verticaux (2) sont de solides plaques plates.

5. Meuble modulaire selon les revendications précédentes, **caractérisé en ce que** les éléments horizontaux (5) sont composés d'une série de sections rectangulaire (10) et placés parallèles les uns par rapport aux autres, les sections qui n'ont pas de premier ensemble de trous (6) pour se fixer sur les montants verticaux (2), étant assemblées sur les éléments formant traverse (15), via des moyens d'assemblage (19).

6. Meuble modulaire selon la revendication 3, **caractérisé en ce que** les sections rectangulaires (10) sont creuses et ont au moins deux parois de séparation longitudinales et continues (11) à l'intérieur, pour le renforcement.

7. Meuble modulaire selon les revendications 4 et 5, **caractérisé en** de que les moyens d'assemblage (19) se composent de doubles boulons de pression, dont la première extrémité est insérée dans un second trou (17), qui est dans la surface de l'élément formant traverse (15), le boulon étant fixé sur ladite traverse, et dont la seconde extrémité est insérée dans un second trou (18) correspondant dans la surface de la section (10), ladite section (10) étant fixée sur le boulon et par conséquent, également sur l'élément formant traverse (15).

8. Meuble modulaire selon les revendications 4, 5 et 6, **caractérisé en ce que** les sections parallèles (10) sont assemblées par au moins une barre transversale (9).

9. Meuble modulaire selon les revendications précédentes, **caractérisé en ce que** les bases (7) des éléments d'assemblage (4a et 4b) sont adaptées pour s'assembler aux différents éléments externes, tels que des roulettes pivotantes, des cales en caoutchouc ou des couvercles.
